# EUROPÄISCHE PATENTANMELDUNG

(11) **EP 1 393 651 A1**
(43) Veröffentlichungstag der Anmeldung: **03.03.2004**
(21) Anmeldenummer: 02019572.3
(22) Anmeldetag: 02.09.2002
(51) Int. Cl.: A47B 21/03, B32B 31/00

(54) **Handgelenkstütze**

(71) Anmelder: Octogone GmbH, 79395 Neuenburg (DE)
(72) Erfinder: Bruns, Robert, 79395 Neuenburg (DE)
(74) Vertreter: Zimmermann, Günter, Dr.

(57) **Zusammenfassung**

Um bei einer Handgelenksstütze mit einer oberen Schicht (2), einer Schicht aus einem elastischen Material (4), mindestens einer Verstärkungsschicht (5, 6) aus einem im wesentlichen nicht verdichtbaren Material, und einer unteren Schicht (3), wobei die untere Schicht (3) und die obere Schicht (2) so miteinander verbunden sind, daß die elastische Schicht (4) und die mindestens eine Verstärkungsschicht (5, 6) eingeschlossen sind, einen optimalen Kontakt zwischen der Stütze und der Arbeitsfläche sowie weiterhin eine optimale Formbeständigkeit der Stütze zu erreichen, weist die mindestens eine Verstärkungsschicht (6), welche an die untere Schicht (3) angrenzt, mindestens eine Durchlaßöffnung (7) für Luft oder Gas auf.

## Beschreibung

Die Erfindung bezieht sich auf eine Handgelenksstütze gemäß dem Oberbegriff des Anspruchs 1.

Eine derartige Handgelenksstütze ist durch die WO 99/44470 bekannt. Die bekannte Stütze wird bei der Arbeit vor einem Bildschirm in Verbindung mit einer Maus verwendet und dient zur Unterstützung des Handgelenkes, damit dieses und auch der Arm bei längerer Arbeit nicht unnötig belastet wird. Zusätzlich verbessert sich damit auch insgesamt die Körperhaltung. Bei dieser Stütze ist eine im wesentlichen luftundurchlässige Schicht zwischen der Verstärkungsschicht und dem elastischen Material vorhanden, um ein Austreten der Luft aus dem elastischen Material in Richtung der unteren Schicht zu verhindern. Hierdurch soll vermieden werden, daß sich die Luft zwischen der Verstärkungsschicht und der unteren Schicht ansammelt. Dies hätte zur Folge, daß sich die untere Schicht zur Arbeitsfläche hin wölbt und damit der Kontakt zwischen der Stütze und der Arbeitsfläche verschlechtert wird. Nachteiligerweise liegt jedoch die bekannte Stütze immer noch nicht vollständig auf der Arbeitsfläche auf, so daß der Kontakt zwischen der Stütze und der Arbeitsfläche unzureichend ist.

Durch die US-PS 5 125 606 ist weiterhin eine Handgelenksstütze bekannt, weiche eine obere Schicht, eine Schicht aus einem elastischen Material, eine Verstärkungsschicht aus einem im wesentlichen nicht verdichtbaren Material und eine untere Schicht aufweist. Die untere Schicht und die obere Schicht sind so miteinander verbunden, daß die elastische Schicht und die Verstärkungsschicht eingeschlossen sind.

Die Aufgabe der Erfindung wird somit darin gesehen, die Handgelenksstütze der eingangs genannten Art derart weiterzuentwickeln, daß ein optimaler Kontakt zwischen der Stütze und der Arbeitsfläche sowie weiterhin eine optimale Formbeständigkeit der Stütze erreicht wird.

Zur Lösung dieser Aufgabe wird erfindungsgemäß vorgeschlagen, daß die Handgelenksstütze gemäß dem Oberbegriff des Anspruchs 1 entsprechend dem kennzeichnenden Teil dieses Anspruchs ausgebildet ist.

Bei der erfindungsgemäßen Handgelenksstütze können nun die Gase und Luftblasen, welche sich bei der Herstellung der Stütze durch die Verschweißung der unteren Schicht und der Verstärkungsschicht bilden, durch die Durchlaßöffnung hindurch nach oben gelangen und sich im Innenraum der Stütze verteilen. Dadurch ist die Unterseite der Stütze sehr eben ausgebildet und ermöglicht einen guten Kontakt zur Arbeitsfläche. Weiterhin ist die erfindungsgemäße Handgelenksstütze sehr formbeständig. Denn es wurde festgestellt, daß nicht die bei der Belastung der Handgelenksstütze sich verschiebenden Luftpolster eine erhebliche Rolle für die ebene Form der Unterseite der Stütze spielen, sondern die bei der Herstellung der Stütze im Bereich zwischen der unteren Schicht und der Verstärkungsschicht sich bildenden Gase oder Luftblasen.

Es ist denkbar, eine Vielzahl von Durchlaßöffnungen mit unterschiedlichen Formen in der Verstärkungsschicht anzubringen. Es hat sich jedoch als ausreichend erwiesen, wenn eine Durchlaßöffnung etwa in der Mitte der Verstärkungsschicht angeordnet ist. Eine Ausführungsform der Erfindung sieht deshalb vor, daß die mindestens eine Durchlaßöffnung etwa in der Mitte der mindestens einen Verstärkungsschicht angeordnet ist. Die Durchlaßöffnung kann unterschiedliche Formen aufweisen. Nach Herstellung der Stütze ist vorteilhafterweise die untere Schicht im Bereich der Durchlaßöffnung in diese Öffnung etwas eingedrungen. Dadurch ist die Form der Durchlaßöffnung auf der Unterseite der unteren Schicht erkennbar, so daß die Querschnittsform der Durchlaßöffnung auch für Werbezwecke beispielsweise in Form eines Firmenlogos ausgebildet sein kann. Vorteilhafterweise ist der Querschnitt der Durchlaßöffnung kreisförmig, mehreckig oder oval.

Um die erfindungsgemäße Handgelenksstütze auch als Werbeträger zu nutzen, sieht eine weitere Ausführungsform der Erfindung vor, daß die obere Schicht eine Ausnehmung oder Vertiefung zum Anbringen eines durchsichtigen Materials aufweist. Bei dem Material kann es sich beispielsweise um eine durchsichtige Folie handeln, unterhalb welcher das Werbemittel angeordnet ist. Damit die Folie bündig mit der Oberfläche der oberen Schicht verläuft, sieht eine Ausführungsform der Erfindung vor, daß an den Rändern der Ausnehmung eine Einprägung vorgesehen ist. Die Tiefe der Einprägung entspricht der Dicke der Folie und die Tiefe der Ausnehmung bis zum Boden der Einprägung entspricht der Dicke des Werbemittels. In die Ausnehmung wird das Werbemittel eingesetzt. In die Einprägung wird die durchsichtige Folie eingesetzt und anschließend verschweißt. Ist nur die Ausnehmung vorgesehen, so ist die Folie auf ihrer Unterseite werbemäßig bedruckt, wobei die Dicke der Folie der Tiefe der Ausnehmung entspricht, damit die Folie bündig mit der Oberseite der oberen Schicht abschließt. Die Ausnehmung kann unterschiedliche Formen wie rechteckig, oval oder kreisförmig haben. Die Ausnehmung selbst kann auch durch eine Einprägung in die obere Schicht hergestellt werden, so daß sich zusammen mit der weiteren Einprägung am Rand der Ausnehmung eine mehrstufige, insbesondere zweistufige Vertiefung ergibt.

Die Handgelenksstütze kann auch in Verbindung mit einer Mausmatte, einem sogenannten Mauspad, verwendet werden. Eine weitere Ausführungsform der Erfindung sieht deshalb vor, daß die Stütze mit einer Mausunterlage verbunden ist.

Die Erfindung wird nachstehend anhand der Zeichnung näher erläutert. Die Zeichnung zeigt ein Ausführungsbeispiel der Erfindung. Hierbei stellen dar:

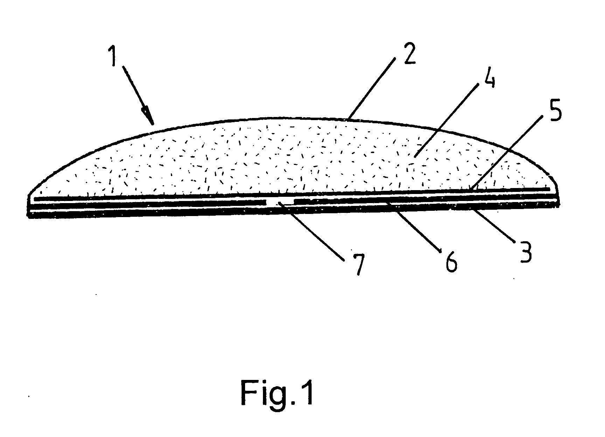

Fig. 1 einen Querschnitt durch die erfindungsgemäße Handgelenksstütze,

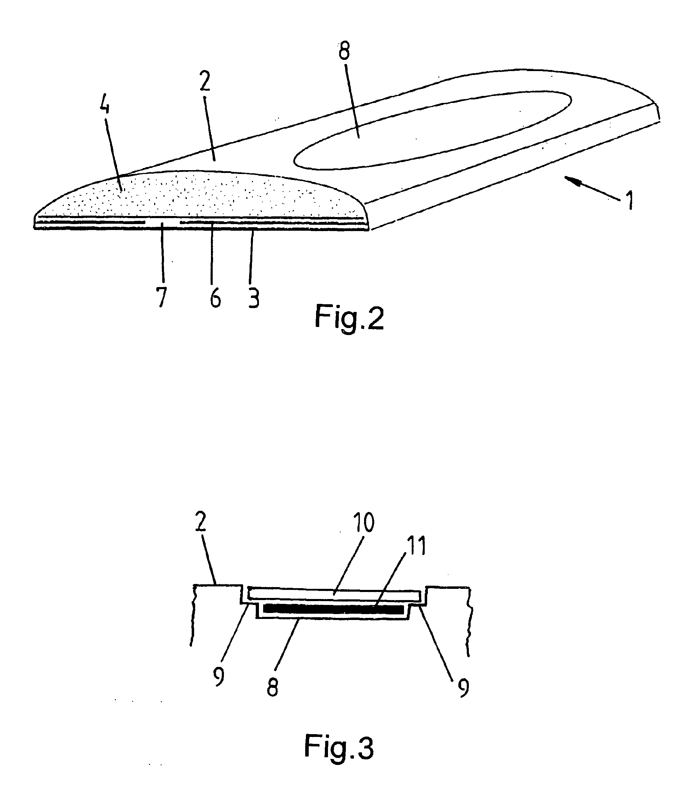

Fig.2 eine perspektivische Ansicht der Handgelenksstütze nach Fig.1 und
Fig. 3 einen abgebrochenen Querschnitt der oberen Schicht nach Fig.2.

Die erfindungsgemäße Handgelenksstütze 1 weist eine obere Schicht 2 und eine untere Schicht 3 auf. Dazwischen sind ausgehend von der Unterseite der oberen Schicht 2, eine Schicht aus einem im wesentlichen elastischen Material 4, beispielsweise Schaumstoff, eine erste Verstärkungsschicht 5 und eine zweite Verstärkungsschicht 6 nachfolgend nach unten zur unteren Schicht 3 hin angeordnet. Die obere Schicht 2, die untere Schicht 3 und die zweite Verstärkungsschicht 6 sind thermisch miteinander verschweißt. Als Verschweißung sind alle bekannten Schweißarten denkbar. Die Verschweißung erfolgt umlaufend an den Außenrändern der oberen Schicht 2, der unteren Schicht 3 und der zweiten Verstärkungsschicht 6. Weiterhin ist die Oberseite der unteren Schicht 3 auch noch vollständig mit der Unterseite der Verstärkungsschicht 6 verschweißt. Bei der ersten Verstärkungsschicht 5 handelt es sich um eine Schicht aus Pappe. Die zweite Verstärkungsschicht 6 ist aus PVC. In der Mitte der Verstärkungsschicht 6 ist eine Durchlaßöffnung 7 in Form eines Loches für Luft oder Gas angeordnet. Die Verstärkungsschicht 5 liegt locker auf der Verstärkungsschicht 6 auf und ist von ihrem Grundriß her etwas kleiner als die Verstärkungsschicht 6.

In der oberen Schicht 2 der Handgelenksstütze 1 ist mittig eine ovale Ausnehmung 8 vorgesehen. An den Rändern der Ausnehmung 8 ist umlaufend eine Einprägung 9 vorgesehen. Die Einprägung 9 ist im Querschnitt stufenförmig ausgebildet. In die Ausnehmung 8 ist ein Werbemittel 11, beispielsweise ein Papierdruck, eingesetzt. In die Einprägung 9 ist eine Folie 10 aus durchsichtigem Material mit ihren Rändern eingesetzt. Die Folie 10 ist im Bereich der Einprägung 9 thermisch mit der oberen Schicht 2 verschweißt. Die Einprägung 9 ist so ausgebildet, daß die eingesetzte Folie nach der Verschweißung bündig mit der Oberseite der oberen Schicht 2 abschließt. Hierzu entspricht die Tiefe der Einprägung 9 der Dicke der Folie 10. Ebenso entspricht die Tiefe der Ausnehmung 8 etwa der Dicke des Werbemittels 11. Damit schließt das Werbemittel 11 bündig mit dem Boden der Einprägung 9 ab. Wird die erfindungsgemäße Handgelenksstütze benutzt, so gleitet das Handgelenk problemlos über die Oberseite der oberen Schicht 2 und bleibt nicht, wie bei bekannten Handgelenksstützen, an den Rändern der Folie hängen.

Bei der Herstellung der erfindungsgemäßen Handgelenksstütze werden die bei der thermischen Verschweißung der oberen Schicht 2 und der unteren Schicht 3 sich bildende Luftblasen und Gase durch die Durchlaßöffnung 7 nach oben hin in Richtung des elastischen Materials 4 geführt. Da die erste Verstärkungsschicht 5 lose auf der zweiten Verstärkungsschicht 6 aufliegt, kann die Luft oder das Gas zwischen diesen beiden Verstärkungsschichten 5, 6 hindurch nach allen Seiten gleichmäßig in den Innenraum der Stütze dringen. Damit bilden sich keine Luft- oder Gaseinschlüsse zwischen der unteren Schicht 3 und der zweiten Verstärkungsschicht 6, sodaß die Handgelenksstütze insgesamt an ihre Unterseite eben ausgebildet ist. Hierdurch wird ein guter Kontakt zwischen der Stütze und der Arbeitsfläche, auf der sie aufliegt, ermöglicht. Weiterhin behält die erfindungsgemäße Handgelenksstütze über längere Zeit auch ihre Form und biegt sich nicht, wie die bekannte Handgelenksstütze, nach einiger Zeit etwa bananenförmig durch.

## Patentansprüche

1. Handgelenksstütze mit einer oberen Schicht (2), einer Schicht aus einem elastischen Material (4), mindestens einer Verstärkungsschicht (5, 6) aus einem im wesentlichen nicht verdichtbaren Material, und einer unteren Schicht (3), wobei die untere Schicht (3) und die obere Schicht (2) so miteinander verbunden sind, daß die elastische Schicht (4) und die mindestens eine Verstärkungsschicht (5, 6) eingeschlossen sind,
**dadurch gekennzeichnet,**
**daß** die mindestens eine Verstärkungsschicht (6), welche an die untere Schicht (3) angrenzt, mindestens eine Durchlaßöffnung (7) für Luft oder Gas aufweist.

2. Stütze nach Anspruch 1,
**dadurch gekennzeichnet,**
**daß** die mindestens eine Durchlaßöffnung (7) etwa in der Mitte der mindestens einen Verstärkungsschicht (6) angeordnet ist.

3. Stütze nach einem der vorhergehenden Ansprüche,
**dadurch gekennzeichnet,**
**daß** die untere Schicht (3) in die Durchlaßöffnung (7) eingreift.

4. Stütze nach einem der vorhergehenden Ansprüche,
**dadurch gekennzeichnet,**
**daß** die Durchlaßöffnung (7) kreisförmig, mehreckig oder oval ausgebildet ist.

5. Stütze nach einem der vorhergehenden Ansprüche,
**dadurch gekennzeichnet,**
**daß** die mindestens eine Verstärkungsschicht (6) mit der oberen Schicht (2) und der unteren Schicht (3) verbunden ist.

6. Stütze nach einem der vorhergehenden Ansprüche,
**dadurch gekennzeichnet,**
**daß** die obere Schicht (2) eine Ausnehmung (8) zum Anbringen eines durchsichtigen Materials (10) aufweist.

7. Stütze nach Anspruch 6,
**dadurch gekennzeichnet,**
**daß** an den Rändern der Ausnehmung (8) eine Einprägung (9) in der oberen Schicht (2) vorgesehen ist.

8. Stütze nach einem der vorhergehenden Ansprüche,
**gekennzeichnet durch**
eine Verbindung mit einer Mausunterlage.
